Europäisches Patentamt

European Patent Office

Office européen des brevets

(11) Veröffentlichungsnummer: **0 417 429 A1**

# (12) EUROPÄISCHE PATENTANMELDUNG

(21) Anmeldenummer: 90113599.6

(22) Anmeldetag: 16.07.90

(51) Int. Cl.5: **F16B 13/08**, F16B 13/06

(30) Priorität: 14.09.89 DE 3930789
09.10.89 DE 3933694

(43) Veröffentlichungstag der Anmeldung:
20.03.91 Patentblatt 91/12

(84) Benannte Vertragsstaaten:
AT BE CH DE DK ES FR GB GR IT LI NL SE

(71) Anmelder: fischerwerke Artur Fischer GmbH
& Co. KG
Weinhalde 14 - 18
W-7244 Waldachtal 3/Tumlingen(DE)

(72) Erfinder: Fischer, Artur, Prof.Dr.h.c.
Weinhalde 34
W-7244 Waldachtal 3/Tumlingen(DE)

(54) Spreizdübel.

(57)

2.1 Es sind Schlagspreizdübel für die Verankerung in Bohrlöchern mit Hinterschneidung bekannt, bei denen ein Spreizanker auf einen Spreizkonus mittels eines Bohrhammers oder eines Hammers aufgetrieben wird.

2.2 Zur Vermeidung der aus dem Einschlagvorgang resultierenden Rißbildungen am Mauerwerk sowie zur Bereitstellung eines dünnwandigen Spreizdübels wird ein Spreizdübel vorgeschlagen, dessen Spreizhülse mittels einer in ihre Innenbohrung eingeführte Innenhülse auf einen mit einem Spreizkonus versehenen Bolzen aufgedreht wird, wobei sich deren Spreizsegmente dem hinterschnittenen Bohrloch anpassen.

Fig.1

## SPREIZDÜBEL

Die Erfindung betrifft einen Spreizdübel für die Verankerung in konisch nach innen erweitert hergestellten Bohrlöchern gemäß der Gattung des Hauptanspruchs.

Aus der DE-OS 36 20 099 ist ein Schlagspreizdübel bekannt, der aus einem eine Innenbohrung aufweisenden und von seinem Einführende ausgehend, über einen Teil seiner Länge geschlitzten Spreizanker besteht, der durch Auftreiben auf einen am Bohrlochgrund aufsitzenden und mit einem Spreizkonus versehenen Spreizkörper verankerbar ist. Das Auftreiben des Spreizankers auf den Spreizkörper erfolgt bei diesem Schlagspreizdübel in der Weise, daß mit einem in einen Bohrhammer eingespanntes Einschlagwerkzeug oder mit einem Hammer der Spreizanker auf den Spreizkörper aufgetrieben wird.

Durch die bei der Montage des Schlagspreizübels auszuführenden Schlagbewegungen werden zum einen hohe Einschlagkräfte zum Eintreiben des Spreizankers benötigt. Auch tritt während des Einschlagvorgangs aufgrund der ausgeführten Schlagbewegungen das Problem der Sprengwirkung auf, durch die Risse am Mauerwerk oder ein Ausbrechen des Mauerwerks speziell im Bereich des konisch hinterschnittenen Bohrlochs bedingt sein können.

Bei der Verwendung von Spreizdübeln bei der Deckenmontage ist weiterhin der Gesichtspunkt zu berücksichtigen, daß im Bereich von Zimmerdecken oder dergleichen regelmäßig zur Montage von Spreizdübeln aufgrund von in den Decken verlaufenden Leitungen und weiteren Vorrichtungen regelmäßig wenig Raum vorhanden ist. Schlagspreizdübel der herkömmlichen Art sind aufgrund ihrer Länge sowie ihres Durchmessers bei der Deckenmontage ungeeignet. Dies insbesondere auch unter Berücksichtigung der Tatsache, daß Normgewinde bestimmter Durchmesser jeweils auch gewisse Mindestwandstärken der Schlagspreizdübel bedingen, was insbesondere bei Normgewinden größerer Durchmesser dazu führt, daß die entsprechenden Schlagspreizdübel aufgrund ihres Durchmessers zur Montage ungeeignet sind.

Der Erfindung liegt die Aufgabe zugrunde, einen Spreizdübel zu schaffen, der kostengünstig herstell- und einfach montierbar ist sowie hohe Haltewerte erzielt.

Erfindungsgemäß wird dies dadurch erreicht, daß die Spreizhülse im Bereich der unterhalb der die Spreizsegmente begrenzenden umlaufenden Nut einen Absatz mit einem größeren Wanddurchmesser aufweist, als er im Bereich der mit dem Innengewinde versehenen Innenbohrung vorgesehen ist und daß auf das Außengewinde des Bolzens eine mit einem Innengewinde versehenen Innenhülse aufgedreht ist.

Zur Verankerung des erfindungsgemäßen Spreizdübels wird dieser in das vorbereitete, eine Hinterschneidung aufweisende Bohrloch eingesetzt. Anders als bei herkömmlichen Schlagspreizdübeln wird jedoch vorliegend nicht die Spreizhülse selbst in das Bohrloch eingeschlagen, sondern es wird vielmehr die Innenhülse mittels eines Bohrers oder dergleichen auf das Außengewinde des Bolzens aufgedreht. Die Wandung der Spreizhülse kann daher auch einen lediglich geringen Durchmesser aufweisen, wodurch bei einem möglichst geringen Außendurchmesser der Spreizhülse ein großer Durchmesser der mit einem Innengewinde versehenen Innenbohrung erzielt werden. Normgewinde größerer Durchmesser bedingen somit nicht auch eine Vergrößerung des Außendurchmessers der Spreizhülse, da an dieser selbst keine Anschlagfläche für das Einschlagwerkzeug selbst vorzusehen ist.

Eine formschlüssige Aufspreizung der an der Spreizhülse angeordneten Spreizsegmente im hinterschnittenen Bohrloch wird vorliegend durch das Eindrehen der Innenhülse in die Spreizhülse sowie durch das Aufdrehen der Innenhülse auf den Bolzen erreicht. Die Aufspreizung wird somit vorliegend durch das Drehmoment und nicht durch Einschlagbewegungen erzielt. Die aus den während des Montagevorgangs von Schlagspreizdübeln vorgenommenen Schlagbewegungen resultierenden Nachteile der Sprengung des Mauerwerks können somit vermieden werden.

Da beim erfindungsgemäßen Spreizdübel ein größerer Durchmesser der Innenbohrung nicht gleichzeitig einen größeren Außendurchmesser der Spreizhülse bedingt, da an der Spreizhülse eine Schlagfläche nicht vorgesehen sein muß, kann die Dicke der Wand der Spreizhülse auf ein Minimum reduziert werden. Dies führt neben dem Vorteil der Materialersparnis auch dazu, daß nach der Montage Schrauben mit größerem Durchmesser in den Dübel eingeführt werden können, ohne daß dadurch ein Dübel mit entsprechend größerem Außendurchmesser gewählt werden müßte.

Eine vollflächige Anlage der aufgespreizten Spreizsegmente der Spreizhülse im Bereich der Hinterschneidung des Bohrlochs wird dadurch erreicht, daß die Innenhülse auf das Außengewinde des Bolzens aufgedreht wird, wobei die Spreizhülse mit ihren Spreizsegmenten über den Konus des Bolzens geführt wird, da die Innenhülse sich mit ihrer dem Konus zugewanden Stirnseite an der Anschlagfläche des im Bereich der unterhalb der die Spreizsegmente begrenzenden umlaufenden Nut ausgebildeten Absatzes abstützt.

Durch die weitere Ausgestaltung der Erfindung, daß die Innenhülse an ihrer Innenwand eine in die Profilierung des Schaftes eingreifenden Profilierung aufweist, kann die Innenhülse mittels eines Schlagwerkzeugs auf den Bolzen aufgetrieben werden. Dabei verklemmt sich die Innenhülse auf dem profilierten Bolzen. Der Bolzen besitzt vorzugsweise Ringnuten, die in eine entsprechende Profilierung der Innenhülse einrasten. Dadurch entsteht eine formschlüssige Verbindung zwischen Innenhülse und Bolzen. Die Innenhülse wird bis zu einem an der Spreizhülse ausgebildeten Absatz in diese eingetrieben, so daß eine feste Verbindung zwischen Spreizhülse und Innenhülse und damit auch zwischen Spreizhülse und Spreizkonus entsteht.

Die Innenhülse kann aus einem weichen Metall oder einem anderen vorzugsweise verformbaren Material bestehen, damit diese auf den gezahnten oder in sonstiger Weise profilierten Bolzen auftreibbar ist und sich fest mit diesem verankert.

In der Zeichnung sind Ausführungsbeispiele der Erfindung dargestellt.

Es zeigen:
Figur 1 einen erfindungsgemäßen Spreizdübel in ungespreiztem Zustand,
Figur 2 einen im hinterschnittenen Bohrloch eines Mauerwerks verankerten Spreizdübel,
Figur 3 ein weiteres Ausführungsbeispiel und
Figur 4 den Spreizdübel nach Figur 3 in verankertem Zustand.

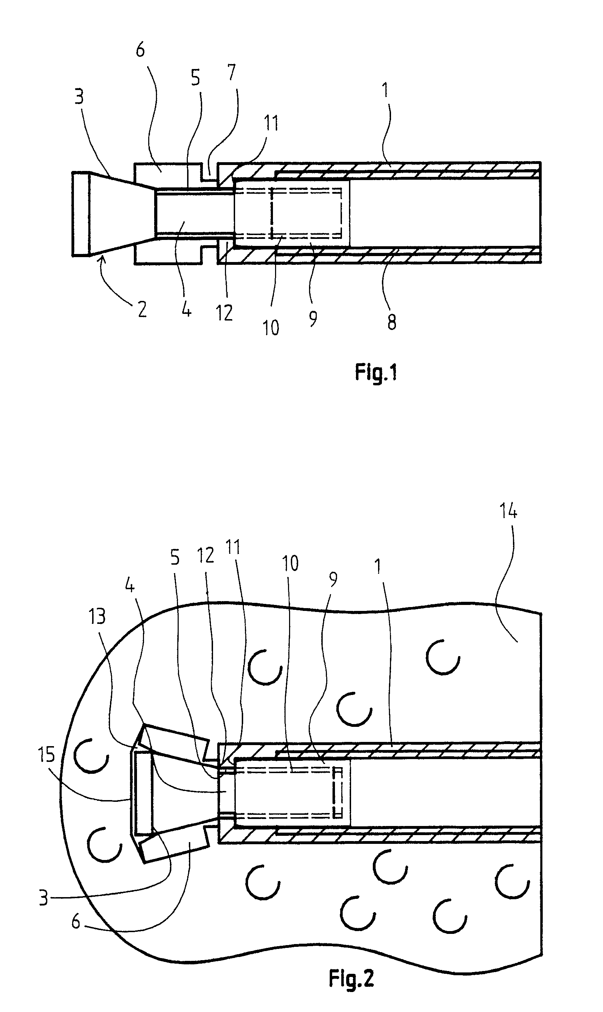

Der in Figur 1 dargestellte Spreizdübel besteht aus einer Spreizhülse 1 sowie einem Bolzen 2, an dem ein Konus 3 ausgebildet ist. Am Schaft 4 des Bolzens 2 ist ein Außengewinde 5 vorgesehen. Die Spreizhülse 1 weist in ihrem Spreizbereich Spreizsegmente 6 auf, die in ihrem Abschlußbereich von einer Nut 7 umlaufen werden.

In die teilweise mit einem Innengewinde 8 versehene Innenbohrung der Spreizhülse 1 ist eine Innenhülse 9 eingeführt, die ebenfalls ein Innengewinde 10 aufweist. Mit ihrer dem Konus 3 des Bolzens zuweisenden Stirnseite 11 liegt die Innenhülse 9 einem Absatz 12 an, der dadurch gebildet wird, daß die Spreizhülse 1 in diesem Bereich einen größeren Wanddurchmesser aufweist.

Der aus Figur 2 ersichtliche Spreizdübel ist im mit einer Hinterschneidung 13 versehenen Bohrloch eines Mauerwerks 14 verankert.

Bei der Montage des Spreizdübels wird der in ungespreiztem Zustand befindliche, aus Figur 1 ersichtliche Spreizdübel in das vorbereitete, mit einer Hinterschneidung 13 versehene Bohrloch eines Mauerwerks 14 oder einer Decke mittels eines, aus der Zeichnung nicht ersichtlichen Bohrers, an dem ein Einschlagaufsatz angeordnet ist, eingedreht. Das Einschlaggerät wirkt hierbei auf die Innenhülse 9, die mit ihrer einen Stirnseite 11 am Absatz 12 anliegt. Bei Auftreffen des Bolzens 2 mit seiner, an dessen Konus 3 befindlichen Stirnfläche 15 am Bohrlochgrund des mit einem Hinterschnitt 13 versehenen Bohrlochs wird die mit einem Innengewinde 10 versehene Innenhülse 9 auf den mit einem Außengewinde 5 versehenen Schaft 4 aufgedreht. Das Drehmoment wird dabei über den Absatz 12 auf die Spreizhülse 1 übertragen, die mit ihren Spreizseg menten 6 über den Konus 3 des Bolzens 2 geführt wird. Hierbei entsteht eine formschlüssige Aufspreizung der Spreizsegmente 6 im hinterschnittenen Bohrloch, wobei durch die umlaufende Nut ein definiertes Aufspreizen der Spreizsegmente ermöglicht ist.

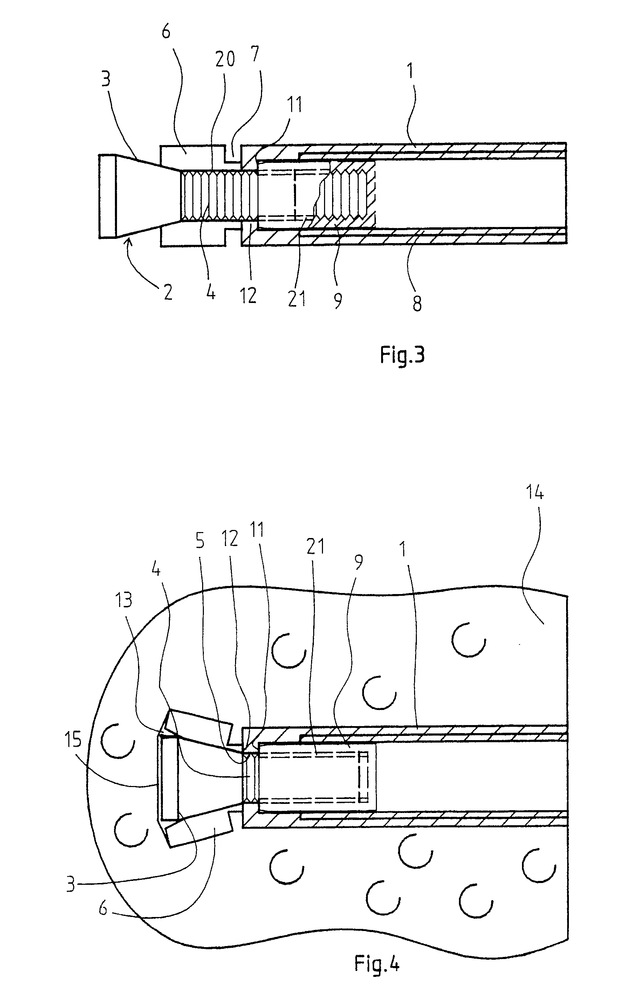

Der in Figur 3 dargestellte Spreizdübel besteht ebenfalls aus einer Spreizhülse 1 sowie einem Bolzen 2, an dem ein Konus 3 ausgebildet ist. Am Schaft 4 des Bolzens 2 sind Ringbunde 20 vorgesehen. In die teilweise mit einem Innengewinde 8 versehene Innenbohrung der Spreizhülse 1 ist eine Innenhülse 9 eingeführt, die Ringnuten 21 aufweist.

Die Ringbunde 20 und Ringnuten 21 sind in ihrer Kontur so aneinander angepaßt, daß die Innenhülse in der in Figur 4 dargestellten Position fest mit dem Bolzen verbunden ist. Die Ringbunde 20 und Ringnuten 21 können zu diesem Zweck im Querschnitt sägezahnförmig ausgebildet sein, damit die Innenhülse 9 am Bolzen 2 einrastet.

## Ansprüche

1. Spreizdübel für die Verankerung in konisch nach innen erweitert hergestellten Bohrlöchern, bestehend aus einer in ihrem Spreizbereich längsgeschlitzten Spreizhülse, die im Anschlußbereich ihrer Spreizsegmente von einer Nut umlaufen ist, mit einer zum Teil mit einem Innengewinde versehenen Innenbohrung, in der ein sich am Bohrlochgrund abstützender, einen Spreizkonus aufweisender Bozen befindlich ist, der an seinem sich an den Konus anschließenden Schaft ein Außengewinde aufweist, **dadurch gekennzeichnet**, daß die Spreizhülse (1) im Bereich der unterhalb die Spreizsegmente (6) begrenzenden, umlaufenden Nut (7) einen Absatz (12) mit einem größeren Wanddurchmesser aufweist, als er im Bereich der mit dem Innengewinde (8) versehenen Innenbohrung vorgesehen ist und daß auf das Außengewinde (5) des Bolzens (2) eine mit einem Innengewinde (10) versehene Innenhülse (9) aufgedreht ist. *(Priorität: 14.09.89; P 39 30 789.1)*

2. Spreizdübel nach Anspruch 1, **dadurch gekennzeichnet**, daß die Innenhülse (9) während des Montagevorgangs mit ihrer dem Konus (3) zuweisenden Stirnseite (11) an der einen Anschlag bildenden Unterseite des Absatzes (12) anliegt. *(Priorität: 14.09.89; P 39 30 789.1)*

3. Verfahren zur Verankerung eines Spreizdübels nach einem der vorhergehenden Ansprüche, **dadurch gekennzeichnet**, daß der Spreizdübel in ein vorgebohrtes, mit einem Hinterschnitt (13) versehenes Bohrloch eingedreht wird, indem mittels einer Bohrmaschine oder dergleichen die Innenhülse (9) auf den mit der Stirnseite (15) seines Konusses (3) auf den Bohrlochgrund treffenden Bolzen (2) aufgedreht wird, wobei eine Aufspreizung der Spreizsegmente (6) über den Konus (3) des Bolzens (2) erfolgt. *(Priorität: 14.09.89; P 39 30 789,1)*

4. Spreizdübel nach Anspruch 1, **dadurch gekennzeichnet**, daß die Innenhülse (9) an ihrer Innenwand eine in die Profilierung des Schaftes (4) eingreifende Profilierung aufweist. *(Priorität: 09.10.89; P 39 33 694,8)*

5. Spreizdübel nach Anspruch 4, **dadurch gekennzeichnet**, daß am Schaft (4) Ringbunde (20) über dessen gesamte Länge verteilt angeordnet sind, und daß an der Innenwand der Innenhülse (9) Ringnuten (21) als Profilierung vorgesehen sind. *(Priorität: 09.10.89; P 39 33 694,8)*

6. Spreizdübel nach einem der Ansprüche 4 oder 5, **dadurch gekennzeichnet**, daß die Profilierungen an Schaft (4) und Innenwand der Innenhülse (9) im Querschnitt sägezahnförmige Kontur aufweisen. *(Priorität: 09.10.89; P 39 33 694,8)*

7. Spreizdübel nach einem der vorhergehenden Ansprüche, **dadurch gekennzeichnet**, daß die Innenhülse (9) aus einem weichen Metall oder einem sonstigen, geringfügig verformbaren Material besteht. *(Priorität: 09.10.89; P 39 33 694,8)*

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 820 759 (FISCHER-WERKE ARTHUR FISCHER GMBH & CO) <br> * das ganze Dokument * <br> – – – | 1 | F 16 B 13/08 <br> F 16 B 13/06 |
| A | EP-A-0 035 095 (ARTHUR FISCHER) <br> * Seite 4, Absatz 4; Figuren * <br> – – – | 1 | |
| A | EP-A-0 331 816 (FISCHER-WERKE ARTHUR FISCHER GMBH & CO) <br> * das ganze Dokument * <br> – – – – – | 5,6,7 | |

**RECHERCHIERTE SACHGEBIETE (Int. Cl.5)**

F 16 B

Der vorliegende Recherchenbericht wurde für alle Patentansprüche erstellt

| Recherchenort | Abschlußdatum der Recherche | Prüfer |
|---|---|---|
| Den Haag | 04 Dezember 90 | ARESO Y SALINAS J. |